# EUROPEAN PATENT SPECIFICATION

(11) **EP 4 578 965 B1**
(45) Date of publication and mention of the grant of the patent: **02.09.2026**
(21) Application number: 23865051.9
(22) Date of filing: 10.07.2023
(51) Int. Cl.: C22B 1/16, C10L 5/00, C10L 5/04, C10L 5/36, C10L 5/40, C22B 1/20, C22B 1/245

(54) **CARBONACEOUS MATERIAL TO BE USED FOR PRODUCTION OF SINTERED ORE**
KOHLENSTOFFHALTIGES MATERIAL ZUR HERSTELLUNG VON GESINTERTEM ERZ
MATÉRIAU CARBONÉ À UTILISER POUR LA PRODUCTION D'UN MINERAI FRITTÉ

(30) Priority: 12.09.2022 JP 2022144445
(43) Date of publication of application: 02.07.2025
(73) Proprietor: JFE Steel Corporation, Tokyo 100-0011 (JP)
(72) Inventor: IWAMI, Yuji, Tokyo 100-0011 (JP); FUJIWARA, Shimpei, Tokyo 100-0011 (JP); HIGUCHI, Takahide, Tokyo 100-0011 (JP)
(74) Representative: Haseltine Lake Kempner LLP
(86) International application number: PCT/JP2023/025433
(87) International publication number: WO 2024/057689

(56) References cited:
- WO-A1-2010/087468
- CN-A- 102 352 273
- JP-A- 2013 237 876
- JP-A- 2013 237 876
- JP-A- 2014 218 713
- JP-A- 2020 186 436
- JP-A- S5 784 760
- KR-B1- 101 545 985
- A MIZUNO: "Electrostatic precipitation", IEEE TRANSACTIONS ON DIELECTRICS AND ELECTRICAL INSULATION, 30 October 2000 (2000-10-30), New York, pages 615 - 624, XP055172071, Retrieved from the Internet <URL:http://ieeexplore.ieee.org/xpls/abs_all.jsp?arnumber=879357> [retrieved on 20150225], DOI: 10.1109/94.879357
- STEINER DOMINIK ET AL: "Investigation of dust resistivity for a fractioned biomass fly ash sample during poor combustion conditions with regard to electrostatic precipitation", FUEL, IPC SIENCE AND TECHNOLOGY PRESS , GUILDFORD, GB, vol. 227, 22 April 2018 (2018-04-22), pages 59 - 66, XP085408340, ISSN: 0016-2361, DOI: 10.1016/J.FUEL.2018.04.086

## Description

### Technical Field

The present invention relates to a carbonaceous material as a solid fuel used to produce a sintered ore.

### Background Art

In the production process of a sintered ore, a mixture of an iron ore, flux, and a carbonaceous material as a solid fuel is sintered in a sintering machine via the combustion heat of such carbonaceous material, thereby obtaining a sintered ore. Usually, coke breeze is used as a carbonaceous material; there may also be used anthracite or the like other than coke breeze in terms of risk diversification for, for example, price fluctuations of raw material coal, and troubles in a coke production equipment.

Meanwhile, in response to the growing awareness of environmental conservation in recent years, carbonaceous materials have progressively diversified with the intention of reducing the burden on the environment, aside from the idea of risk diversification or the like. As one example thereof, Patent Literature 1 provides a carbonaceous material to be used for the production of a sintered ore, assuming the use of subbituminous coal and brown coal. The properties of this carbonaceous material are such that a reaction start temperature is 550°C or lower; a volatile matter (VM) is 1.0% or more; an atomic number ratio between hydrogen and carbon (H/C) is 0.040 or more, and a pore quantity of pores with pore sizes of 0.1 to 10 µm is 50 mm³/g or larger when measured by the mercury intrusion technique. Further, in Patent Literature 2, proposed is the use of a raw material for sintering containing 10% by mass or more of a solid fuel with a combustion start temperature of lower than 450°C, when using 30% or more of a high crystal water iron ore that contains 4.0% by mass or more of crystal water. Patent Literature 3 discloses a carbonaceous material to be used for the production of a sintered ore.

### Citation List

### Patent Literature

Patent Literature 1: Japanese Patent No.4681688
Patent Literature 2: Japanese Patent No.4837799 Patent Literature 3 : WO 2010/087468 A1

### Summary of Invention

### Technical Problem

However, the use of the carbonaceous material that is described in Patent Literature 1 and the use of the solid fuel that is described in Patent Literature 2 are focused on the productivity of a sintered ore and NOx; the impact of exhaust gas treatment is not taken into consideration in Patent Literature 1 and Patent Literature 2. For this reason, using the carbonaceous material described in Patent Literature 1 and the solid fuel described in Patent Literature 2 was not able to prevent troubles in an exhaust gas system that are attributed to an exhaust gas treatment, such as tar generation in a pipe and white smoke generation in an electric dust collector.

It is an object of the present invention to solve the above problems by providing a carbonaceous material capable of preventing, if used for the production of a sintered ore, troubles in an exhaust gas system that are attributed to an exhaust gas treatment, such as tar generation in a pipe and white smoke generation in an electric dust collector.

### Solution to Problem

The carbonaceous material of the present invention is as described in claims 1 to 4.

### Advantageous Effect of Invention

According to the carbonaceous material of the present invention to be used for the production of a sintered ore, by using a carbonaceous material satisfying the range of conditions limited by the present invention, pyrolysates generated at the time of combustion and substances generated by a gas phase reaction thereafter can be prevented from adhering to pipes and equipment in an exhaust gas system, whereby these pipes and equipment in the exhaust gas system can be prevented from breaking down. Further, there can be prevented white smoke generation; and the lowering of a dust collecting efficiency when using an electric dust collector to collect the dust in the exhaust gas generated at the time of using the carbonaceous material of the invention.

### Brief Description of Drawings

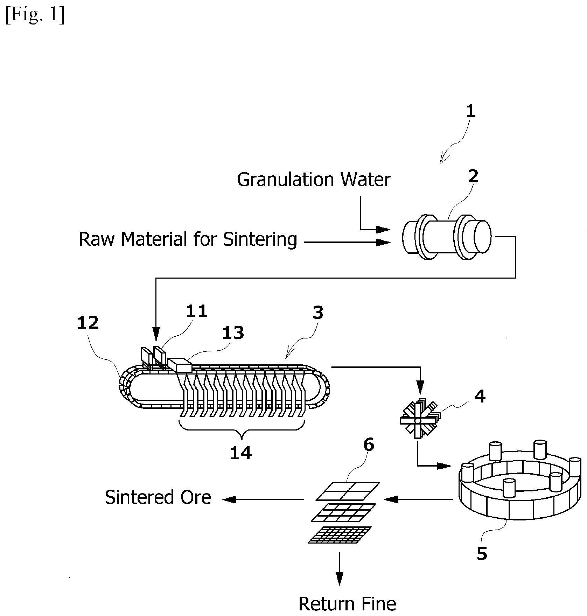

[Fig.1] is a schematic diagram showing one example of a sintered ore production equipment employing a carbonaceous material of the present embodiment.

### Description of Embodiment

An embodiment of the present invention is described in detail hereunder. Here, the following embodiment is a set of examples of a device and/or method embodying the technical concept of the present invention and is not to limit the configuration of the present invention to those shown below. That is, various modifications can be made to the technical concept of the present invention within the technical scope described in the claims.

### <Sintered ore production equipment employing the carbonaceous material of the present invention that is to be used for the production of a sintered ore>

Fig.1 is a schematic diagram showing an example of a sintered ore production equipment 1 that employs the carbonaceous material of the present embodiment. The sintered ore production equipment 1 has a drum mixer 2 as a granulator, a sintering machine 3, a crushing machine 4, a cooler 5, and a sieving device 6. A raw material for sintering containing an iron-containing raw material, an auxiliary raw material, and a coagulating material such as a carbon material and a coke powder is subjected to granulation in the drum mixer 2 with a granulation water being added thereto. The granulated raw material for sintering is then transferred to the sintering machine 3.

The sintering machine 3 is, for example, a Dwight-Lloyd type sintering machine. The sintering machine 3 has a raw material for sintering feeding device 11, a continuous-type pallet carriage 12, an ignition furnace 13, and a wind box 14. The granulated raw material for sintering is charged into the pallet carriage 12 from the raw material for sintering feeding device 11 to form a charged layer of the raw material for sintering. The coagulating material contained in the surface layer of the charged layer is ignited by the ignition furnace 13, and the air in the charged layer is sucked downward through the wind box 14, thereby causing the combustion molten zone in the charged layer to be moved to the lower region of the charged layer. Due to such movement of the combustion molten zone, the charged layer is sintered to form a sintered cake.

When sucking the air in the charged layer downward through the wind box 14, a gas fuel and/or an oxygen-enriched air enriched with oxygen may be supplied from the upper region of the charged layer. The gas fuel is any combustible gas selected from a blast furnace gas, a coke oven gas, a converter gas, a city gas, a natural gas, a methane gas, an ethane gas, a propane gas, and a mixed gas of these gases.

The sintered cake is crushed by the crushing machine 4 and is cooled by the cooler 5. The sieving device 6 is then used to sieve the crushed product of the sintered cake into a sintered ore having a particle size of 5 mm or larger and a return fine having a particle size of smaller than 5 mm. The return fine is again used as the raw material for sintering. The sintered ore is produced in such manner.

### <Carbonaceous material of the present invention to be used for the production of a sintered ore>

Biomass-derived carbonaceous materials (referred to as biomass charcoal hereunder) are gathering attention in terms of carbonaceous material diversification intended to reduce environmental load. Biomass charcoal absorbs carbon dioxide gas until a plant as its raw material has grown; thus, from the perspective of carbon neutrality, in the case of a fuel using such biomass carbon, the discharge amount of carbon dioxide gas outside the system can be counted as none. Therefore, the use of biomass charcoal is under consideration even in an iron ore sintering process employing a normal coke breeze. One feature of biomass charcoal is that it has a combustion start temperature of roughly 550°C or lower, which is lower than that of coke (600 to 800°C). Further, it is known that the thermal decomposition reaction of biomass or the like is largely affected by a plant as its raw material; the properties of biomass charcoals vary significantly even though they may be roughly categorized as heat-treated biomass charcoals, which makes it impossible to sort them out simply based on combustion start temperature.

In a sintering step performed by the sintering machine 3, flux and the carbonaceous material are added to an iron ore, followed by continuously charging them onto the sintering machine 3 to form a sintering bed composed of the charged layer of the raw material for sintering. By sucking an exhaust gas from the lower end of the sintering bed after igniting the upper end thereof, the combustion of the carbonaceous material will propagate from the upper end of the bed to the lower end thereof, thereby causing the iron ore and flux to react and agglomerate with each other via such heat. The exhaust gas suction from the lower layer is carried out with a blower, whereby the exhaust gas sucked is then ejected from a chimney after passing through the inner side of a duct, a dust collector, and a desulfurization and denitration equipment.

Hydrocarbons having as many as or more benzene rings than naphthalene are called tars; the tar generation of biomass is enormously large when heated. The large amount of tar(s) generated adhere to, for example, the inner side of a pipe, a dust removal filter, and the impeller of a blower, which may cause troubles. Thus, when selecting a biomass charcoal, it is necessary to keep the amount of tar(s) generated, i.e., the volatile matter (VM) generated by thermal decomposition low. Here, VM is in accordance with a measurement method described in JIS M8812.

Further, a large amount of used carbonaceous material is contained in the dust in the exhaust gas and is collected by an electric dust collector. If using an electric dust collector to capture dust with a low electric conductivity, the surface of a dust collection pole will be covered by the low-electric conductivity dust, which makes removal via hammering or the like difficult. Moreover, sparks will occur in the dust layer covering the dust collection pole due to insulation breakdown, thereby inducing white smoke troubles or the like in the electric dust collector. Thus, a biomass charcoal used needs to further meet a condition of having an electric conductivity of a certain level or more. Here, as electric conductivity, there was used an inverse of an electric resistivity measured in accordance with JIS B9915.

Based on the above premises, in the present invention, an electric conductivity at 80 to 200°C is set to 1.0×10⁻⁹ S/m or more, and the volatile matter (VM) is set to 15% or less, for the purposes of suppressing the generation of tars at the time of producing a sintered ore, and suppressing the white smoke troubles of the electric dust collector that are caused by the exhaust gas generated at the time of producing a sintered ore.

In the case of the carbonaceous material of the present invention to be used for the production of a sintered ore, as a specific method(s) for adjusting electric conductivity and the volatile matter, there can be considered, for example, selecting a carbonaceous material satisfying the above volatile matter (VM) and electric conductivity, or a method of reducing the volatile matter (VM) via a dry distillation treatment or the like. Further, if using multiple types of carbonaceous materials, there can be employed, for example, adjusting the composition so that there are contained 80% or more of those whose weighted average of their volatile matters (VM) satisfies the above condition, and whose electric conductivities satisfy the above condition as well. Described in greater detail hereunder are methods for measuring the electric conductivity and volatile matter in the present invention.

### (Method for measuring electric conductivity)

For electric conductivity measurement, there is used an electric resistivity obtained in accordance with a parallel-plate electrode method (JIS B9915). An inverse of the electric resistivity obtained in accordance with the parallel-plate electrode method (JIS B9915) is obtained as electric conductivity.

### (Method for measuring volatile matter (VM))

The volatile matter (VM) is measured in accordance with JIS M8812. Specifically, a sample is put into a crucible with a lid and heated at 900°C for 7 min with contact with air being blocked, followed by calculating the mass fraction (%) of a loss on heating thereof with respect to the sample, and subtracting a simultaneously quantified water content therefrom to obtain the volatile matter (VM).

### Examples

A batch-wise sintering test was performed using several carbonaceous materials. Table 1 shows the properties of the carbonaceous materials used. Here, the volatile matter (VM) was measured by JIS M8812, and as electric conductivity, there was used an inverse of an electrical resistivity measured in accordance with JIS B9915.

**[Table 1]**

| Carbonaceous Material type | Volatile Matter (VM) | Electrical Conductivity |
|---|---|---|
| Coke breeze | 0.7% | 7.8×10⁻⁴ S/m |
| Anthracite A | 14.7% | 2.3×10⁻⁹ S/m |
| Anthracite B | 15.6% | 8.9×10⁻¹⁰ S/m |
| Anthracite C | 9.0% | 1.4×10⁻⁵ S/m |
| Anthracite D | 9.5% | 2.5×10⁻¹¹ S/m |
| Biomass | 77.1% | 3.4×10⁻⁷S/m |

A batch-wise sintering test was performed on a material containing a single or multiple carbonaceous materials shown in Table 1 to conduct two kinds of evaluations. One evaluation was to perform a continuous test up to 100 times and check the number of times at which the current value of a blower whose rated current (normal use) was 60A exceeded 75A which was set as the upper limit. Another evaluation was to treat the exhaust gas in the batch-wise sintering test by using a small dust collector adjusted to an electric field intensity of 3.4 kV/cm which was of a level of an actual equipment, and determine whether or not it was possible to remove the adhering dust by hammering. As test conditions, Table 2 shows the blending ratios of the carbonaceous materials, the weighted average values of VM, and the results of the two evaluations. Here, in each example, there was used the same ore raw material as the sintering target.

**[Table 2]**

| | | Reference Example | Example 1 | Example 2 | Example 3 | Example 4 | Example 5 | Comparative Example 1 | Comparative Example 2 | Comparative Example3 | Comparative Example 4 | Comparative Example 5 |
|---|---|---|---|---|---|---|---|---|---|---|---|---|
| Carbonaceous Material Type (%) | Coke Breeze | 100 | | | 80 | 90 | 60 | | | | 70 | 60 |
| | Anthracite A | | 100 | | | | 20 | | | | | 5 |
| | Anthracite B | | | | 20 | | 10 | 100 | | | 30 | 30 |
| | Anthracite C | | | 100 | | | | | | | | |
| | Anthracite D | | | | | | | | 100 | | | |
| | Biomass | | | | | 10 | 10 | | | 100 | | 5 |
| Weighted Average of VM | | 0.7% | 14.7% | 9.0% | 3.7% | 8.3% | 12.6% | 15.6% | 9.5% | 77.0% | 5.2% | 9.7% |
| Number of Pot Test | | 100 | 100 | 100 | 100 | 100 | 100 | 33 | 100 | 17 | 100 | 100 |
| Removal via Hammering | | Removed | Removed | Removed | Removed | Removed | Removed | Not removed | Not removed | Removed | Not removed | Not removed |
| Evaluation | | Good | Good | Good | Good | Good | Good | Poor | Poor | Poor | Poor | Poor |

As shown in Table 2, coke breeze which is normally used in sintering was used in a reference example where when VM was 0.7%, the current value did not exceed the upper limit current value even when the test was performed 100 times, and hammering on the dust was also possible. Examples 1 and 2, and Comparative Examples 1 and 2 each used an anthracite which fell under the same category. However, the test was able to be performed 100 times when using an anthracite A with a VM of 14.7% as was the case with the Example 1; in contrast, the current value exceeded the upper limit current value after performing the 33rd test, and the removal of the dust via hammering was also difficult, when using an anthracite B with a VM of 15.6% as was the case with the Comparative Example 1. In the Example 2, VM was smaller, and electric conductivity was also at a higher level, as compared to the Example 1; even in the Example 2, the test was able to be performed 100 times, and the removal of the dust via hammering was also possible. Meanwhile, while there was not much difference in VM between the Comparative Example 2 and the Example 2, there was a significant difference in electric conductivity between the two examples; in the Comparative Example 2, while the test was able to be performed 100 times, the removal of the dust via hammering was difficult. Further, in a Comparative Example 3 in which there was only used biomass with a VM of 77.0%, although an unusable state was reached after performing the 17th test, dust removal via hammering was possible. In a Example 3 and Comparative Example 4, there were combined coke breeze; and the anthracite B with which, when used alone, it was unable to perform sintering 100 times and difficult to remove the dust via hammering. In the Example 3 where coke breeze was used at a ratio of 80%, and the weighted average of VM was 3.7%, the test was able to be performed 100 times, and removal via hammering was also possible. In contrast, in the Comparative Example 4 where coke breeze was used at a ratio of 70%, and the weighted average of VM was 5.2%, while the number of times of the test reached 100, the removal of the dust via hammering was difficult. In a Example 5 and Comparative Example 5, all the carbonaceous materials used this time were combined together. In the Example 5 where the weighted average of VM was 12.6%, the test was able to be performed 100 times, and the removal of the dust via hammering was also possible. In contrast, in the Comparative Example 5 where the weighted average of VM was 9.7%, while the test was able to be performed 100 times, the removal of the dust via hammering was difficult.

### Industrial Applicability

As for the carbonaceous material of the present invention to be used for the production of a sintered ore, by using the same when producing a sintered ore, the carbonaceous material can serve as a material capable of preventing troubles in an exhaust gas system that are attributed to an exhaust gas treatment, such as tar generation in a pipe and white smoke generation in an electric dust collector, thereby making the carbonaceous material of the present invention industrially useful.

### Reference Signs List

1 Sintered ore production equipment
2 Drum mixer
3 Sintering machine
4 Crushing machine
5 Cooler
6 Sieving device
11 Raw material for sintering feeding device
12 Pallet carriage
13 Ignition furnace
14 Wind box

## Claims

1. A carbonaceous material to be used for the production of a sintered ore, being a carbonaceous material as a solid fuel used to produce a sintered ore, having an electric conductivity of 1.0×10⁻⁹ S/m or more and a volatile matter (VM) of 15% or less, wherein the electric conductivity and VM are measured in accordance with the methods set out in the description.

2. The carbonaceous material to be used for the production of a sintered ore according to claim 1, wherein when the carbonaceous material is comprised of multiple types of carbonaceous materials, carbonaceous materials each having an electric conductivity of 1.0×10⁻⁹ S/m or more are contained at a ratio of 80% or more, and a weighted average value of the volatile matters (VM) of the multiple types of carbonaceous materials is 15% or less.

3. The carbonaceous material to be used for the production of a sintered ore according to claim 1 or 2, wherein the carbonaceous material includes a carbonaceous material having a combustion start temperature of 550°C or lower.

4. The carbonaceous material to be used for the production of a sintered ore according to claim 3, wherein the carbonaceous material having a combustion start temperature of 550°C or lower is coke whose raw material includes biomass charcoal, anthracite, waste plastic charcoal, brown coal, and subbituminous coal.

## Patentansprüche

1. Kohlenstoffhaltiges Material, das für die Herstellung von einem gesinterten Erz verwendet werden soll, wobei es ein kohlenstoffhaltiges Material als ein fester Brennstoff ist, um ein gesintertes Erz herzustellen, und eine elektrische Leitfähigkeit von 1,0×10⁻⁹ S/m oder mehr und flüchtige Bestandteile (VM) von 15 % oder weniger aufweist, wobei die elektrische Leitfähigkeit und die VM nach den in der Beschreibung dargelegten Verfahren gemessen werden.

2. Kohlenstoffhaltiges Material, das für die Herstellung von einem gesinterten Erz nach Anspruch 1 verwendet werden soll, wobei, wenn das kohlenstoffhaltige Material aus mehreren Arten von kohlenstoffhaltigen Materialien besteht, kohlenstoffhaltige Materialien, die eine elektrische Leitfähigkeit von jeweils 1,0×10⁻⁹ S/m oder mehr aufweisen, zu einem Anteil von 80 % oder mehr enthalten sind und ein gewichteter Mittelwert der flüchtigen Bestandteile (VM) der verschiedenen Arten von kohlenstoffhaltigen Materialien 15 % oder weniger ist.

3. Kohlenstoffhaltiges Material, das für die Herstellung von einem gesinterten Erz nach Anspruch 1 oder 2 verwendet werden soll, wobei das kohlenstoffhaltige Material ein kohlenstoffhaltiges Material, das eine Verbrennungsstarttemperatur von 550 °C oder weniger aufweist, beinhaltet.

4. Kohlenstoffhaltiges Material, das für die Herstellung von einem gesinterten Erz nach Anspruch 3 verwendet werden soll, wobei das kohlenstoffhaltige Material, das eine Verbrennungsstarttemperatur von 550 °C oder weniger aufweist, Koks ist, dessen Rohmaterial Biomassekohle, Anthrazit, Kunststoffabfallkohle, Braunkohle und subbituminöse Kohle beinhaltet.

## Revendications

1. Matériau carboné à utiliser pour la production d'un minerai fritté, qui est un matériau carboné sous la forme d'un combustible solide utilisé pour produire un minerai fritté, ayant une conductivité électrique de 1,0×10⁻⁹ S/m ou plus et une teneur en matières volatiles (MV) de 15 % ou moins, dans lequel la conductivité électrique et la teneur en MV sont mesurées conformément aux procédés décrits dans la description.

2. Matériau carboné à utiliser pour la production d'un minerai fritté selon la revendication 1, dans lequel, lorsque le matériau carboné est composé de plusieurs types de matériaux carbonés, les matériaux carbonés ayant chacun une conductivité électrique de 1,0×10⁻⁹ S/m ou plus sont contenus dans un rapport de 80 % ou plus, et une valeur moyenne pondérée des matières volatiles (MV) des plusieurs types de matériaux carbonés est de 15 % ou moins.

3. Matériau carboné à utiliser pour la production d'un minerai fritté selon la revendication 1 ou 2, dans lequel le matériau carboné comporte un matériau carboné ayant une température de début de combustion de 550 °C ou moins.

4. Matériau carboné à utiliser pour la production d'un minerai fritté selon la revendication 3, dans lequel le matériau carboné ayant une température de début de combustion de 550 °C ou moins est du coke dont la matière première comporte du charbon de biomasse, de l'anthracite, du charbon de plastique usagé, du lignite et du charbon subbitumineux.
